# EUROPÄISCHE PATENTANMELDUNG

(11) **EP 2 383 131 A1**
(43) Veröffentlichungstag der Anmeldung: **02.11.2011**
(21) Anmeldenummer: 10161240.6
(22) Anmeldetag: 28.04.2010
(51) Int. Cl.: B60J 7/00

(54) **Fahrzeugdach mit integriertem Rollo-Schiebedach**

(71) Anmelder: Saint-Gobain Glass France, 92400 Courbevoie (FR)
(72) Erfinder: Lux, Thomas, 71554 Weissach im Tal (DE)
(74) Vertreter: Lendvai, Tomas

(57) **Zusammenfassung**

Fahrzeugdach mit integriertem Rollo-Schiebedach mindestens umfassend:
a. ein Fahrzeugdach (1) mit einer Dachöffnung (2),
b. gegenüber am Rand der Dachöffnung (2) beidseitig in Längsrichtung angebrachte Führungen (3a, 3b), Rippen (4a, 4b), Dome (9)
c. Rollowellenaufnahmen (5a, 5b), eine Rollorolle (6) in den Rollowellenaufnahmen (5a, 5b) am oberen Rand,
d. ein auf der Rollorolle (6), in den Führungen (3a, 3b) und an den Rippen (4a, 4b) verschiebbares Rollo (7) und
e. Abdeckungen (8a, 8b) über den Rollowelleaufnahmen (5a, 5b), Führungen (3a, 3b), Rippen (4a, 4b) und Domen (9),
wobei das Fahrzeugdach (1), Führungen (3a, 3b), Rippen (4a, 4b), Dome (9) und Rollowellenaufnahme (5a, 5b) ein einziges Bauelement (10) aus einem polymeren Werkstoff bilden.

## Beschreibung

Die Erfindung betrifft ein Fahrzeugdach mit integriertem Rollo, ein Verfahren zu dessen Herstellung und dessen Verwendung.

Sonnendächer in Kraftfahrzeugen erfreuen sich einer zunehmenden Beliebtheit. Die Sonnendächer bestehen häufig aus einer mit einer transparenten Scheibe bedeckten Öffnung des Fahrzeugdaches. Im Hochsommer und bei starker Sonneneinstrahlung kann sich jedoch der Fahrgastraum durch die Dachöffnung sehr stark aufheizen. Zudem kann der Fahrer durch gestreutes Licht während der Fahrt geblendet werden. Auch wirkt sich die Aufheizung des Fahrzeuginnenraums negativ auf die Konzentrations- und Reaktionsfähigkeit des Fahrers aus. Eine mögliche Lösung ist ein regulierbares oder verschiebbares Rollo oder Jalousie, die in Abhängigkeit von der Stärke und Stellung der einfallenden Sonnenstrahlung geöffnet oder geschlossen werden können. Insbesondere beim stehenden Fahrzeug kann so die Aufheizung des Fahrgastinnenraums und damit der Verbrauch der Klimaanlage im Fahrbetrieb deutlich gesenkt werden. In der kalten Jahreszeit wird häufig das Rollo zugezogen um einem Wärmeverlust durch das transparente Dach vorzubeugen.

Im Zuge immer strengerer Vorgaben zur Kohlendioxidemission von Kraftfahrzeugen gibt es zudem starke Bestrebungen das Gewicht eines Fahrzeugs und damit dessen Treibstoffverbrauch zu senken. Stetige Weiterentwicklungen im Bereich der Kunststoffe ermöglichen den Ersatz von großen Teilen der Metallkarosserie durch entsprechend leichtere Elemente aus polymeren Werkstoffen. Insbesondere Teile oder auch der gesamte Dachbereich können durch Elemente aus polymeren Werkstoffen ersetzt werden. Diese zeigen in vielen Fällen bei einem deutlich niedrigeren Gewicht eine vergleichbare Härte, Stabilität und Belastbarkeit wie bei einem Karosseriedach aus Stahl. Zusätzlich wird auf Grund der Gewichtsreduzierung im Dachbereich der Schwerpunkt des Fahrzeugs weiter nach unten verlagert, was einen positiven Einfluss auf das Fahrverhalten hat. Zudem können polymere Werkstoffe im Vergleich zu Metallen bei deutlich niedrigeren Temperaturen hergestellt, bearbeitet und verformt werden. Dies senkt den Energiebedarf und die Kosten bei der Herstellung der Werkstoffe.

Die Montage der Rolloelemente im Fahrzeug erfordert auch bei einem Dach aus polymeren Werkstoffen die Montage eines Rollorahmen durch Verkleben oder Verschrauben mehrerer Einzelteile wie von Führungsschienen, Versteigungsrippen, Verrastungselementen und Rollohalterungen. Viele Einzellschritte bei der Rollomontage erhöhen jedoch die Zeitdauer und den Aufwand der Montage und verteuern die Produktion. Zudem erhöht die Vielzahl der Prozessschritte die Wahrscheinlichkeit von Störungen und Fehlern, die zu Verzögerungen und erhöhten Ausschuss in der Produktion führen können.

EP 1 285 794 A1 offenbart eine Sonnenrollovorrichtung zur Anordnung unter einem transparenten Dachbereich eines Fahrzeuges. Die Sonnenrollovorrichtung ist über eine Wickelwelle und seitlich am Fahrzeugdach angebrachte Führungen verstellbar.

DE 20 2006 015 107 U1 offenbart eine Führungsschiene für ein Rollo eines Schiebedaches, einen Halteabschnitt zur Befestigung der Führungsschiene am Fahrzeug und einen Führungsabschnitt zur Aufnahme des Rollos. Der Halteabschnitt und der Führungsabschnitt sind über einen elastisch federnden Abschnitt verbunden.

EP 0 990 544 A1 offenbart eine verschließbare Fahrzeugdachöffnung mit einer am Dach befestigten Führungsschiene und einem darauf montierten Verschluss. Die Führungsschienen sind insbesondere gegen eindringenden Schmutz geschützt.

EP 1 285 794 A1 offenbart eine Sonnenrollovorrichtung für ein Fahrzeugdach. Die Sonnenrollovorrichtung weist eine an seitlichen Führungen des Fahrzeugdaches verschiebbar geführte Wickelwelle auf, welche zwischen einer Ablagestellung und einer Funktionsstellung verstellbar ist.

Die Aufgabe der Erfindung liegt darin, ein Fahrzeugdach mit integriertem Rollodach bereitzustellen, welches kostengünstig aus möglichst wenigen Einzelteilen gefertigt werden kann und eine hohe Stabilität aufweist.

Die Aufgabe der vorliegenden Erfindung wird erfindungsgemäß durch ein Fahrzeugdach mit integriertem Rollodach gemäß Anspruch 1 gelöst. Bevorzugte Ausführungen gehen aus den Unteransprüchen hervor.

Ein erfindungsgemäßes Verfahren zur Herstellung eines Fahrzeugdaches und dessen Verwendung gehen aus weiteren nebengeordneten Ansprüchen hervor.

Das erfindungsgemäße Fahrzeugdach mit integriertem Rollodach umfasst ein Fahrzeugdach mit einer Dachöffnung aus einem polymeren Werkstoff. Die Erfindung schließt auch Fahrzeugdächer mit ein, bei denen nur ein Teil der Dachkarosserie durch ein Fahrzeugdach aus polymeren Werkstoffen ersetzt worden ist. Am Rand der Dachöffnung sind gegenüber, entweder in Fahrtrichtung oder gegen die Fahrtrichtung des Fahrzeuges rechts und links, Führungen, Rippen (Leisten), Dome, Rolloverriegelung und Rollowellenaufnahmen angebracht. Die Anzahl der Dome und Führungen, Rippen (Leisten), Dome, Rolloverriegelung und Rollowellenaufnahmen ist nicht festgelegt und kann variiert werden. Am Fahrzeugdach sind bevorzugt mindestens zwei Führungen, zwei Rippen, zwei Rollowellenaufnahmen und zwei Dome angebracht. Eine Rollorolle befindet sich in den beiden Rollowellenaufnahmen. Auf der Rollorolle ist ein Rollo aufgewickelt, welches entlang der Führungen und begrenzt durch die Rippen auf- und abgerollt werden kann und so die Dachöffnung im Fahrzeugdach öffnen und schließen kann. An den beiden Rändern des Rollos, welche in die Führungen und an die Rippen eingelegt werden, sind bevorzugt Gleitsteine befestigt. Die Gleitsteine ermöglichen bevorzugt eine flexible und in der Position verschiebbare Halterung des Rollos auf den Führungen und an den Rippen. Abgeschlossen wird die beschriebene Anordnung durch Abdeckungen auf den Rollowellenaufnahmen, den Führungen, den Rippen und der variablen Anzahl von Domen. Die Dome enthalten bevorzugt im Inneren ein Gewinde oder Material für eine selbstschneidende Schraube. Die Dome dienen zur Verschraubung, Befestigung und/oder Fixierung der Abdeckung durch Schrauben, Nieten, Klebstoff, Spreitzdübel oder Clipse. Das Fahrzeugdach, Führungen, Rippen, Dome und Rollowellenaufnahme bilden ein einziges Bauelement aus einem polymeren Werkstoff. Es sind bevorzugt 2 bis 15 Dome neben jeder Rippe beidseitig angeordnet.

Der polymere Werkstoff enthält bevorzugt Polyethylen, Polypropylen, Polystyrol, Polyurethane, Polycarbonate, Polymethylmetacrylate, Polyacrylate, Polyester, Polyamide, Polyethylenterephthalat und/oder Gemische oder Copolymere davon, besonders bevorzugt Polycarbonat und Polycarbontblends wie Polycarbobnat/Polyethylenterephthalat; Polycarbonat/Acrylnitril-Butadien-Styrol; Polycarbonat/Polybutylenterephthalat.

Der polymere Werkstoff ist bevorzugt mit Glasfasern, Glaskugeln, Glasperlen und/oder Mineralkörnern gefüllt.

Die Dachöffnung bildet bevorzugt 30 % bis 80 %, bevorzugt 40 % bis 70 % der Dachfläche des Fahrzeugdaches.

Die Dachöffnung wird bevorzugt von einer transparenten oder (teil-)opaken Scheibe, besonders bevorzugt einer zu öffnenden transparenten oder opaken Scheibe (10) abgedeckt oder abgeschlossen. Die Scheibe enthält bevorzugt Glas oder Polymer, bevorzugt Flachglas (Floatglas), Quarzglas, Borosilikatglas, Kalk-Natron-Glas, Polyethylen, Polypropylen, Polycarbonat und/oder Polymethylmethacrylat.

Die Abdeckungen werden bevorzugt über Schrauben, Nieten, Clipse, Verschweißungen (z.B. Ultraschall), Verrastungen in den Domen befestigt.

Die Abdeckungen enthalten bevorzugt Metalle und Polymere, besonders bevorzugt Aluminium, Polyethylen, Polypropylen, Polystyrol, Polyurethane, Polycarbonate, Polymethylmetacrylate, Polyacrylate, Polyester, Polyamide und/oder Gemische oder Copolymere davon.

Die Abdeckungen, Dome, Rippen oder Führungen können so ausgebildet werden, dass über diese Elemente zusätzliche Funktionen, wie beispielsweise das Befestigen des Dachhimmels oder der Innenbeleuchtung durch Schrauben, Klebstoff, Einhängen, Clipsen oder Nieten, erfolgen kann.

Das Rollo enthält bevorzugt Leder, Kunstleder, textile Fasern, Polymere wie Polyethylen, Polypropylen, Polystyrol, Polyurethane, Polycarbonate, Polymethylmetacrylate, Polyacrylate, Polyester, Polyamide und/oder Gemische oder Copolymere davon.

Das Rollo weist bevorzugt eine Rolloarretierung und das Fahrzeugdach eine Arretierungsöffnung auf. Rolloarretierung und Arretierungsöffnung ermöglichen ein zusätzliches Fixieren und Schließen des Rollos.

Die Rollorolle enthält bevorzugt Polymere und/oder Metalle, bevorzugt Eisen, Chrom, Aluminium, Titan, Vanadium, Nickel, Kobalt, sowie Legierungen der genanten Metalle oder Polyethylen, Polypropylen, Polystyrol, Polyurethane, Polycarbonate, Polymethylmetacrylate, Polyacrylate, Polyester, Polyamide und/oder Gemische oder Copolymere davon.

Die Erfindung umfasst des Weiteren ein Verfahren zur Herstellung eines Fahrzeugdaches mit integriertem Rollo wobei in einem ersten Schritt ein Fahrzeugdach mit einer Dachöffnung oder einem transparenten Durchsichtsbereich sowie jeweils mindestens 2 Führungen, 2 Rippen, Dome, und 2 Rollowellenaufnahmen, spritzgegossen werden. Hierzu können die dem Fachmann bekannten und üblichen Verfahren, beispielsweise Thermoplast-Spritzgießverfahren, zum Spritzgießen von polymeren Werkstoffen verwendet werden. Es werden bevorzugt 2-Komponenten-Spritzgußverfahren verwendet. In einer Spritzgussform des Fahrzeugdaches werden die Dachöffnung, Führung, Rippen und Dome mit ausgebildet. Die Spritzgussform wird anschließend mit dem flüssigen polymeren Werkstoff gefüllt. Nach dem Aushärten des polymeren Werkstoffes kann das Fahrzeugdach mindestens mit der ausgebildeter Dachöffnung, Führungen, Rippen, Domen und Rollowellenaufnahmen entnommen werden. Anschließend wird eine Rollorolle mit Rollo in die Rollowellenaufnahmen eingelegt. Das Rollo wird bevorzugt mit den Gleitsteinen in die Führungen eingelegt, welche durch die Rippen seitlich nach außen begrenzt wird. Über eine am Rollo angebrachte Rolloarretierung und eine Arretierungsmöglichkeit (Öffnung) im Fahrzeugdach lässt sich die Dachöffnung vollständig verschließen. Die Rollowellenaufnahmen, Führungen, Rippen und Domen werden anschließend mit Abdeckungen verschlossen.

Die Abdeckungen werden bevorzugt mit Schrauben, Nieten, Spreitzdübel, Clipse, Klebstoff und/oder Verschweißung an den Domen befestigt.

Das erfindungsgemäße Fahrzeugdach wird bevorzugt in eine Autokarosseriedachöffnung eingesetzt.

Die Erfindung umfasst des Weiteren die Verwendung des Fahrzeugdaches in Kraftfahrzeugen und/oder Lastkraftwagen, Schleppern, bevorzugt als regulierbares Sonnendach eines Kraftfahrzeuges.

Im Folgenden wird die Erfindung anhand einer Zeichnung näher erläutert. Die Zeichnung ist eine rein schematische Darstellung und nicht maßstabsgetreu. Die Zeichnung schränkt die Erfindung in keiner Weise ein.
Es zeigen:
Figur 1 eine Ansicht des erfindungsgemäßen Fahrzeugdaches ohne eingelegtes Rollo (7) und ohne Abdeckung (8a, 8b),
Figur 2 eine Ansicht des fertig montierten Fahrzeugdaches und
Figur 3 ein Fließschema des erfindungsgemäßen Verfahrens zur Herstellung des Fahrzeugdaches.

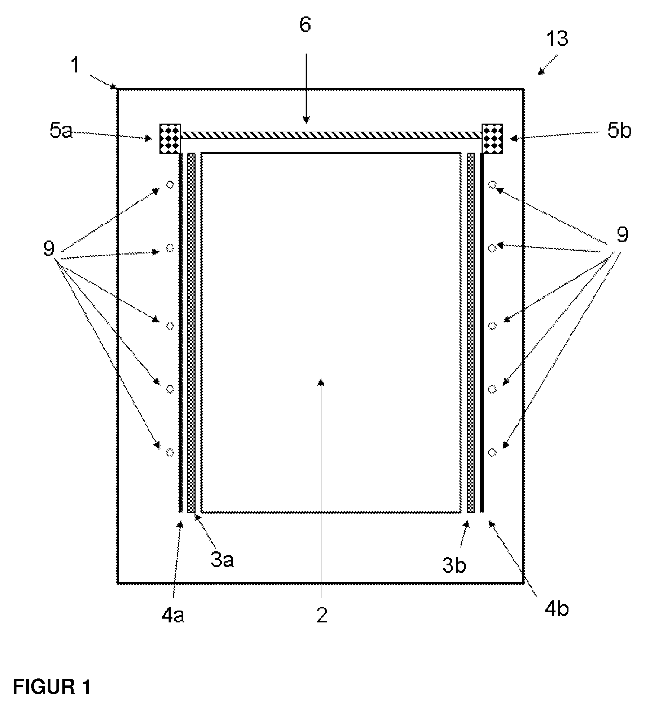

Figur 1 zeigt eine Ansicht des erfindungsgemäßen Fahrzeugdaches (1) ohne eingelegtes Rollo (7) und ohne Abdeckung (8a, 8b). Das Fahrzeugdach (1) umfasst eine Dachöffnung (2) und in Fahrtrichtung des Fahrzeugs links und rechts gegenüberangeordnete Führungen (3a, 3b), Rippen (4a, 4b), Domen (9) und zwei Rollowellenaufnahmen (5a, 5b). Das Fahrzeugdach (1), Dachöffnung (2), Führungen (3a, 3b), Rippen (4a, 4b), Domen (9) und die zwei Rollowellenaufnahmen (5a, 5b) bilden ein einziges Bauelement (13) aus einem polymeren Werkstoff, beispielsweise Polyolefinen. In die Rollowellenaufnahmen (5a, 5b) wird eine Rollorolle (6) eingesetzt.

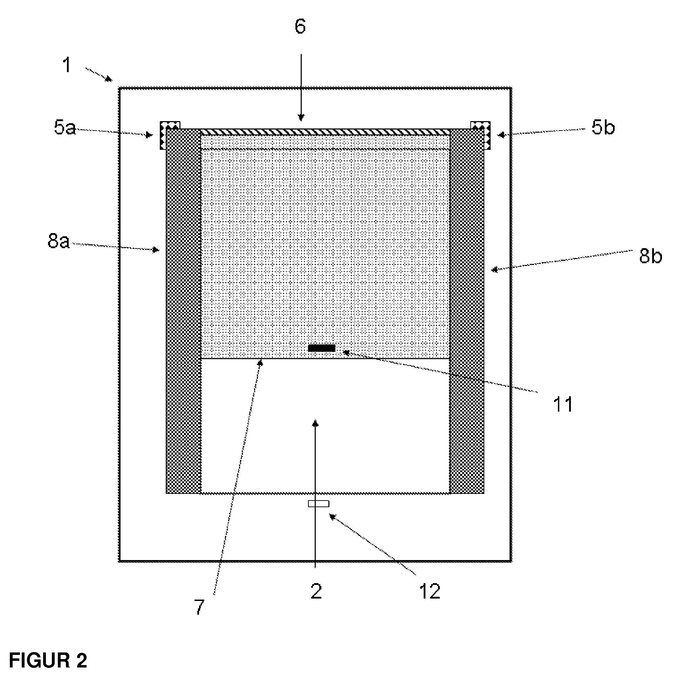

Figur 2 zeigt eine Ansicht des fertig montierten erfindungsgemäßen Fahrzeugdaches (1). Der Aufbau des Fahrzeugdaches (1) entspricht dem in Figur 1 beschriebenen. Die nicht zu sehenden Führungen (3a, 3b), Rippen (4a, 4b), Domen (9) sowie Teile der Rollowellenaufnahmen (5a, 5b) sind durch zwei Abdeckungen (8a, 8b) verdeckt. Die Rolloabdeckungen (8a, 8b) werden über Schrauben und/oder Clipse an den Domen (9) befestigt. Alternativ können die Abdeckungen (8a, 8b) auch über einen Klebstoff, bevorzugt feuchtigkeits- oder heißhärtenden, Klebstoff befestigt werden. Die Abdeckungen (8a, 8b) können dabei an den Rippen (4a, 4b), Domen (9) oder direkt am Fahrzeug verklebt werden. Ein auf der Rollorolle (6) aufgewickeltes Rollo (7) verschließt einen Teil der Dachöffnung (2). Über eine Rolloarretierung (11) im Rollo und eine Arretierungsöffnung (12) im Fahrzeugdach lässt sich die Dachöffnung (2) vollständig verschließen.

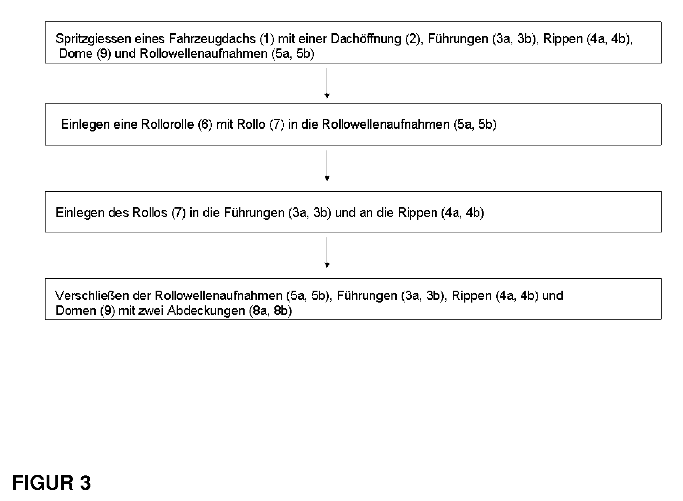

Figur 3 zeigt ein Fließschema des erfindungsgemäßen Verfahrens zur Herstellung des Fahrzeugdaches. In einem ersten Schritt wird ein Fahrzeugdach (1) mit einer Dachöffnung (2), Führungen (3a, 3b), Rippen (4a, 4b), Domen (9) und Rollowellenaufnahmen (5a, 5b) spritzgegossen. Die Temperaturen und Prozessbedingungen richten sich dabei nach dem verwendeten polymeren Werkstoff. Nach dem Abkühlen und gegebenenfalls Aushärten des polymeren Werkstoffes kann das Fahrzeugdach (1) entnommen werden. Anschließend wird eine Rollorolle (6) mit Rollo (7) in die Rollowellenaufnahmen eingelegt (5a, 5b). Das Rollo (7) wird in die Führungen (3a, 3b), nach außen durch die Rippen (4a, 4b) begrenzt, eingelegt. Die Rollowellenaufnahmen (5a, 5b), Führungen (3a, 3b), Rippen (4a, 4b) und Domen (9) werden anschließend mit zwei Abdeckungen (8a, 8b) verschlossen. Das Verschließen der Abdeckungen (8a, 8b) erfolgt bevorzugt mit Hilfe von Schrauben, die die Abdeckungen (8a, 8b) mit einem in den Domen (9) befindlichen Schraubgewinde fest verbinden. Die Anzahl der Dome (9) richtet sich nach der Größe der Dachöffnung (2) und beträgt bevorzugt 3 bis 10 Dome (9) pro Seite.

### Bezugszeichenliste:

- (1): Fahrzeugdach
- (2): Dachöffnung
- (3a, 3b): Führungen
- (4a, 4b): Rippen
- (5a, 5b): Rollowellenaufnahme
- (6): Rollorolle
- (7): Rollo
- (8a, 8b): Abdeckungen
- (9): Domen
- (10): Scheibe
- (11): Rolloarretierung
- (12): Arretierungsöffnung und
- (13): Bauelement

## Patentansprüche

1. Fahrzeugdach mit integriertem Rollo-Schiebedach mindestens umfassend:
a. ein Fahrzeugdach (1) mit einer Dachöffnung (2),
b. gegenüber am Rand der Dachöffnung (2) beidseitig in Längsrichtung angebrachte Führungen (3a, 3b), Rippen (4a, 4b), Dome (9)
c. Rollowellenaufnahmen (5a, 5b), eine Rollorolle (6) in den Rollowellenaufnahmen (5a, 5b) am oberen Rand,
d. ein auf der Rollorolle (6), in den Führungen (3a, 3b) und an den Rippen (4a, 4b) verschiebbares Rollo (7) und
e. Abdeckungen (8a, 8b) über den Rollowellenaufnahmen (5a, 5b), Führungen (3a, 3b), Rippen (4a, 4b) und Domen (9),
wobei das Fahrzeugdach (1), Führungen (3a, 3b), Rippen (4a, 4b), Dome (9) und Rollowellenaufnahme (5a, 5b) ein einziges Bauelement (10) aus einem polymeren Werkstoff bilden.

2. Fahrzeugdach nach Anspruch 2, wobei der polymere Werkstoff Polyethylen, Polypropylen, Polystyrol, Polyurethane, Polycarbonate, Polymethylmetacrylate, Polyacrylate, Polyester, Polyamide, Polyethylenterephthalat und/oder Gemische oder Copolymere davon, besonders bevorzugt Polycarbonat und Polycarbontblends wie Polycarbobnat/Polyethylenterephthalat; Polycarbonat/Acrylnitril-Butadien-Styrol; Polycarbonat/Polybutylenterephthalat enthält.

3. Fahrzeugdach nach Anspruch 1 oder 2, wobei die Dachöffnung (2) 30 % bis 80 %, bevorzugt 40 % bis 70 % der Dachfläche bildet.

4. Fahrzeugdach nach einem der Ansprüche 1 bis 3, wobei die Dachöffnung (2) von einer transparenten oder opaken Scheibe (10), bevorzugt einer zu öffnenden transparenten oder opaken Scheibe (10), abgeschlossen wird.

5. Fahrzeugdach nach Anspruch 4, wobei die Scheibe (10) Glas oder Polymer, bevorzugt Flachglas (Floatglas), Quarzglas, Borosilikatglas, Kalk-Natron-Glas, Polyethylen, Polypropylen, Polycarbonat, Polymethylmethacrylat und/oder Gemische und/oder Copolymere davon enthält.

6. Fahrzeugdach nach einem der Ansprüche 1 bis 5, wobei die Abdeckungen (8a, 8b) über Schrauben, Nieten, Clipse, Klebstoff, Spreitzdübel und/oder Verschweißung in den Domen (9) befestigt werden.

7. Fahrzeugdach nach einem der Ansprüche 1 bis 6, wobei die Abdeckungen (8a, 8b) Metalle und Polymere, besonders bevorzugt Aluminium, Polyethylen, Polypropylen, Polystyrol, Polyurethane, Polycarbonate, Polymethylmetacrylate, Polyacrylate, Polyester, Polyamide und/oder Gemische oder Copolymere davon.

8. Fahrzeugdach nach einem der Ansprüche 1 bis 7, wobei das Rollo (7) Leder, Kunstleder, textile Fasern, Polyethylen, Polypropylen, Polystyrol, Polyurethane, Polycarbonate, Polymethylmetacrylate, Polyacrylate, Polyester, Polyamide und/oder Gemische und/oder Copolymere davon enthält.

9. Fahrzeugdach nach einem der Ansprüche 1 bis 8, wobei das Rollo (7) Lamellenelemente enthält.

10. Fahrzeugdach nach einem der Ansprüche 1 bis 9, wobei das Rollo (7) eine Rolloarretierung (11) und das Fahrzeugdach (1) eine Arretierungsöffnung (12) aufweisen.

11. Fahrzeugdach nach einem der Ansprüche 1 bis 10, wobei die Rollorolle (6) Polymere und/oder Metalle, bevorzugt Eisen, Chrom, Aluminium, Titan, Vanadium, Nickel, Kobalt, Polyethylen, Polypropylen, Polystyrol, Polyurethane, Polycarbonate, Polymethylmetacrylate, Polyacrylate, Polyester, Polyamide und/oder Gemische, Copolymere und/oder Verbundkörper davon enthält.

12. Verfahren zur Herstellung eines Fahrzeugdaches mit integriertem Rollo wobei:
a. ein Fahrzeugdach (1) mit einer Dachöffnung (2), Führungen (3a, 3b), Rippen (4a, 4b), Dome (9) und Rollowellenaufnahmen (5a, 5b) spritzgegossen wird,
b. eine Rollorolle (6) mit einem Rollo (7) in die Rollowellenaufnahmen (5a, 5b) eingelegt wird,
c. das Rollo (7) in die Führungen (3a, 3b) an die Rippen (4a, 4b) eingelegt wird und
d. Rollowellenaufnahmen (5a, 5b), Führungen (3a, 3b), Rippen (4a, 4b) und Domen (9) mit Abdeckungen (8a, 8b) verschlossen werden.

13. Verfahren nach Anspruch 12, wobei die Abdeckungen (8a, 8b) mit Schrauben und/oder Nägeln an den Domen (9) befestigt werden.

14. Verfahren nach Anspruch 12 oder 13, wobei das Fahrzeugdach in eine Autokarosseriedachöffnung eingesetzt wird.

15. Verwendung des Fahrzeugdaches nach einem der Ansprüche 1 bis 11 in Kraftfahrzeugen und/oder Lastkraftwagen, bevorzugt als regulierbares Sonnendach eines Kraftfahrzeuges.
